# EUROPÄISCHE PATENTSCHRIFT

(11) **EP 0 331 877 B1**
(45) Veröffentlichungstag und Bekanntmachung des Hinweises auf die Patenterteilung: **27.01.1993**
(21) Anmeldenummer: 89100550.6
(22) Anmeldetag: 13.01.1989
(51) Int. Cl.: C04B 35/64, C04B 35/00

(54) **Verfahren zur Herstellung von Formteilen aus hochtemperaturfesten Werkstoffen**
Process for the production of shaped bodies of refractory materials
Procédé de fabrication de corps moulés à partir de matériaux résistants aux hautes températures

(30) Priorität: 10.03.1988 DE 3807853
(43) Veröffentlichungstag der Anmeldung: 13.09.1989
(73) Patentinhaber: Nukem GmbH, D-63434 Hanau (DE)
(72) Erfinder: Hrovat, Milan, Dr., D-6458 Rodenbach (DE); Huschka, Hans, Dr., D-6450 Hanau 9 (DE); Kwasny, Rolf-Jörg, Dr., D-6455 Erlensee (DE)

(56) Entgegenhaltungen:
- US-A- 4 771 022
- CHEMICAL ABSTRACTS, Band 99, Nr. 8, 1983, Seite 239, Zusammenfassung Nr. 57748y, Columbus, Ohio, US; & JP-A-58 032 076 (KOBE STEEL LTD)
- CHEMICAL ABSTRACTS, Band 98, Nr. 6, 1983, Seite 293, Zusammenfassung Nr. 39552e, Columbus, Ohio, US; & JP-A-57 140 367 (JAPAN ATOMIC ENERGY RESEARCH)
- CHEMICAL ABSTRACTS, Band 104, Nr. 18, 1986, Seite 331, Zusammenfassung Nr. 154215b, Columbus, Ohio, US; T. KUNO et al.: "Cold isostatic pressing of alumina", & AICHI-KEN TOKONAME YOGYO GIJUTSU SENTA HOKOKU 1985, 12, 11-14

## Beschreibung

Die Erfindung betrifft ein Verfahren zur Herstellung von Formteilen mit hoher Endmaßgenauigkeit aus hochtemperaturfesten Werkstoffen auf der Basis von Kohlenstoff, Oxiden, Karbiden, Nitriden, Siliziden oder deren Mischungen durch Pressen der mit einem Gleitmittel versetzten Pulvergemische in einer Gummiform und anschließendem Sintern.

Formteile aus hochtemperaturfesten Werkstoffen auf der Basis Kohlenstoff oder Keramik werden auf vielen Gebieten eingesetzt. Im allgemeinen werden solche Formteile durch Pressen und Sintern entsprechender Pulver bzw. Pulvergemische hergestellt.

Im Falle graphitischer Formteile wird einem geeigneten Petrolkoks zur Erzielung der Formkörperfestigkeit ein Bindemittel (z.B. Pech oder Kunstharz) zugesetzt. Die Wärmebehandlung erfolgt in 2 Stufen: die Verkokung des Bindemittels unterhalb 1000°C und die Graphitierung oberhalb von 2500 bis maximal 3000°C.

Formteile aus Hochleistungskeramik für Maschinen-, Anlagen und Apparatebau werden ebenfalls durch Pressen hergestellt. Die sich anschließende Wärmebehandlung führt im Gegensatz zu Formkörpern auf Kohlenstoffbasis (Verkokungs- und Graphitierungsprozeß) bei keramischen Werkstoffen auf oxidischer, karbidischer und nitridischer Basis über einen Sinterprozeß zu dichten Formkörpern, die aber noch mechanisch nachbearbeitet werden müssen, um eine hohe Endmaßgenauigkeit zu erreichen.

Beim uniaxialen Gesenkpressen in Stahl- und Hartmetallmatrizen lassen sich mit Pulver hoher Sinteraktivität (mittlere Teilchengröße < 1 µm) trotz großen technischen Aufwandes Bauteile komplizierter Geometrie nicht mit der erforderlichen Qualität herstellen. Üblicherweise treten beim Pressen unzulässige hohe Dichtegradienten im Grünling auf, die beim anschließenden Sintern zu Rissen und zum Verziehen des Bauteils führen. Ferner ist eine anisotrope Schrumpfung beim Sintern nicht zu vermeiden, was zur Verschlechterung der mechanischen Eigenschaften des Bauteils führt.

Um beim Sintern des gepreßten Grünlings sicherzustellen, daß keine unzulässig hohen Spannungen durch Verziehen der Bauteile oder anisotropes Schrumpfen auftreten, werden an die Eigenschaften des Grünlings eine Reihe von Anforderungen gestellt. Je nach Art der Ausgangspulver und deren Eigenschaften ist die Grünlingsdichte der Formkörper üblicherweise auf Werte von etwa 50 % der theoretischen Dichte begrenzt. Daher ist eine mechanische Bearbeitung der Grünlinge nach dem Pressen gar nicht oder nur sehr schwer möglich, da es zu Abplatzungen und Kantenbeschädigungen kommt. Aufgrund der erheblichen Nachverdichtung durch Schrumpfung im Sinterprozeß ist es darüberhinaus nur schwer möglich, Bauteile mit engen Maß- und Formtoleranzen ohne Nachbearbeitung des fertiggesinterten Bauteiles herzustellen.

Aufgrund der hohen Härte gesinterter keramischer Werkstoffe muß die Nachbearbeitung, die zu Erzielung enger Endmaßtoleranzen notwendig ist, mit Diamantwerkzeugen erfolgen.

Durch diesen Einsatz von Diamantwerkzeugen ist eine Nachbearbeitung von fertiggesinterten Bauteilen kostspielig, darüberhinaus auch sehr zeitaufwendig, da nur relativ kleine Abtragsleistungen aufgrund der hohen Härte der keramischen Werkstoffe erreicht werden können

Die Grünlinge dürfen nur eine geringe Anisotropie der physikalischen und mechanischen Eigenschaften parallel und senkrecht zur Preßrichtung aufweisen. Da gilt insbesondere für den Anisotropiefaktor der thermischen Ausdehnung. Außerdem darf keine unzulässige Druckbelastung im Preßling durch Lufteinschlüsse bei der Formgebung erfolgen.

Es ist bekannt, daß bei keramischen Pulvern die Sinteraktivität mit der Feinheit des Pulvers steigt. Feinkörnige Pulver mit hoher BET-Oberfläche haben allerdings aufgrund einer geringen Schüttdichte die Nachteile eines hohen Verdichtungsgrades bei der Formgebung und einer hohen inneren Reibung. Daraus resultiert, daß durch den Druckabfall zur Mitte des Preßlings hin hohe Dichtegradienten und damit verbunden hohe Eigenschaftsgradienten unvermeidlich sind.

Zur Erhöhung der Schüttdichte werden verschiedene Granulierverfahren, wie uniaxiales Pressen mit anschließender Aufmahlung, Sprühtrocknen und Aufbaugranulation, eingesetzt. Mit diesen Granulationsverfahren läßt sich allerdings ein Granulat, das den hohen Anforderungen beim Pressen genügt, nur bedingt herstellen.

Bei der Aufbaugranulation und beim Sprühtrocknen tritt üblicherweise eine unerwünschte zwiebelförmige Struktur mit Dichtegradienten innerhalb des Granulatkornes auf. Beim uniaxialen Pressen mit anschließendem Mahlprozeß kommt es zu einer preßrichtungsabhängigen unerwünschten Ausrichtung der Primärteilchen, die zu Eigenschaftsgradienten in dem Granulat führen.

Zur Herstellung von kugelförmigen Brennelementen aus Graphit ist ein semihydrostatisches Preßverfahren bekannt (DE-PS 16 46 783), bei dem das Pressen in einer Gummiform aus Silikonkautschuk erfolgt. Diese Graphitkugeln müssen bei hohen Anforderungen an die Endmaßgenauigkeit ebenfalls mechanisch nachbearbeitet werden.

Aus der nicht vorveröffentlichten DE-OS 37 20 056 (P 37 20 056.9-45) ist ein Verfahren zur Herstellung von keramischen Formteilen mit hoher Endmaßgenauigkeit ohne mechanische Nachbearbeitung nach dem Sintern und ohne anisotrope Schrumpfungsfolgen bekannt, bei dem die Pulver in einer zylindrischen Gummiform mit ellepsoidförmiger Höhlung in einem Stahlgesenk mit 50 bis 700 MPa gepresst werden und diese Grünlinge auf die für die Formteile erforderliche Geometrie mit einem der Schrumpfungsrate beim Sintern angepassten Übermaß mechanisch ausgearbeitet werden. Erst danach werden die Grünlinge fertiggesintert. Dieses Verfahren hat den Nachteil, daß eine mechanische Ausarbeitung des Grünlings stattfinden muß, wobei Pulverabfälle entstehen, die wieder in den Prozess zurückgeführt werden müssen.

Es war daher Aufgabe der vorliegenden Erfindung, ein Verfahren zur Herstellung von Formteilen mit hoher Endmaßgenauigkeit aus hochtemperaturfesten Werkstoffen auf der Basis von Kohlenstoff, Oxiden, Karbiden, Nitriden, Siliziden oder deren Mischungen durch Pressen der mit einem Gleitmittel versetzten Pulver und Pulvergemische in einer Gummiform und anschließendem Sintern zu entwickeln, bei dem keinerlei mechanische Ausarbeitungen am Grünling oder dem Formteil erforderlich sind.

Diese Aufgabe wird erfindungsgemäß dadurch gelöst, daß das Pressen der Pulver und Pulvergemische in der Gummiform bei Drücken zwischen 30 und 300 MPa erfolgt. diese Formkörper anschließend zu einem isometrischen Granulat mit Körnern von jeweils mehr als 10 000 Primärteilchen zerkleinert werden und das Granulat in einer Metallmatrize mit Drücken von 10 bis 100 MPa zu einem Formteil mit einem die Schrumpfung beim Sintern berücksichtigenden Übermaß gepresst und abschließend gesintert wird, und daß das Gleitmittel ein Luftverdrängungsmittel in Form einer organischen Verbindung enthält, deren Dampfdruck bei Raumtemperatur möglichst niedrig ist und deren Siedepunkt im Bereich der jeweils erforderlichen Preßtemperatur liegt.

Vorzugsweise setzt man dem Pulver oder Pulvergemisch 1 bis 5 Gew. % Gleitmittel und 0,1 bis 1 Gew. % Luftverdrängungsmittel zu. Vorteilhafterweise werden als Luftverdrängungsmittel Kohlenwasserstoffe oder Alkohole verwendet, insbesondere Hexanole und Oktanole.

Günstig ist es auch, wenn die Formkörper in der Gummimatrize auf eine Dichte von über 40 % der theoretischen Dichte gepresst werden. Die optimale Dichte oberhalb 40 % ist dabei von der Materialzusammensetzung des Formkörpers abhängig.

Zur Herstellung der Formteile werden die Pulver bzw. Pulvergemische aus Kohlenstoff, Oxiden, Karbiden, Nitriden und/oder Siliziden mit einem Gleitmittel und einem Luftverdrängungsmittel versetzt. Das erfolgt vorzugsweise dadurch, daß das Gleitmitel (z.B. Stearinsäure) aufgeschmolzen, das Luftverdrängungsmittel zugesetzt und ein Teil (2-10 Gew.%) des Pulvers in die Schmelze eingerührt wird. Nach dem Abkühlen wird gemahlen und das restliche Pulver zugemischt.

Als Luftverdrängungsmittel kommen im allgemeinen aromatische und aliplatische Kohlenwasserstoffe, Alkohole, Aldehyde, Ketone, Äther und Amine in Frage, sofern deren Siedepunkt im Bereich der jeweiligen Preßtemperatur des Formkörpers liegt und der Dampfdruck bei Raumtemperatur möglichst niedrig ist, vorzugsweise 1 bis 5 kPa. Die Preßtemperaturen liegen im Bereich von 120 bis 250°C.

Beispielsweise können als Luftverdrängungsmittel Nonane, Decan, Decalin, Cumol, Mesitylen, Amylalkohole, Hexanole, Heptanole, Octanole, Nonanole, Cyclohexanol, Benzylalkohol, Kresole, Dibutylketon, Cyclohexanon, Mesityloxid, Dibuthyläther und Toluidine verwendet werden.

Besonders vorteilhaft sind aliphatische Alkohole, insbesondere die beiden Isomere (1) und (2) von Hexanol und Octanol. Der Einsatz von Hexanol oder Octanol hängt von der gewählten Preßtemperatur und diese wiederum vom Erweichungspunkt und von der Viskosität des verwendeten Gleitmittels ab. Wird beim Pressen die Temperatur auf 135-140°C festgelegt, so ist Hexanol-(2) mit einem Siedepunkt von 139,9°C besonders gut geeignet. Bei höherer Preßtemperatur im Bereich zwischen 180-200°C ist Octanol-(2) mit einem Siedepunkt von 178,5°C oder Octanol-( 1) mit einem Siedepunkt von 195,2°C vorzuziehen. Die beiden Alkohole Hexanol und Octanol und deren Isomere zeichnen sich durch relativ geringen Dampfdruck von weniger als 2 kPa bei Raumtemperatur aus.

Der Gehalt des Luftverdrängungsmittels im Pulver richtet sich nach dem Porenvolumen im Granulat und dem Zwischenraumvolumen der Pulverschüttung. Erfahrungsgemäß liegt der Gehalt im Bereich zwischen 0,1 und 1 Gew. %.

Zur Minimierung der inneren Reibung wird ein bekanntes Gleitmittel eingebaut. Als Gleitmittel hat sich Stearinsäure besonders gut bewährt. So lassen sich bereits bei Stearingehalten unter 5 Gew. % im Ausgangspulver Formkörper mit hohen Längen-zu Durchmesserverhältnissen (bis zu 5) weitgehend gradientenfrei mit hoher gleichmäßiger Dichte herstellen.

Das mit Gleit- und Luftverdrängungsmitteln versehene Pulver oder Pulvergemisch wird in einer mit einer ellipsoidförmigen Höhlung versehenen zylinderförmigen Gummimatrize gepresst. Das Achsenverhältnis des Ellipsoids liegt dabei zwischen 1:1,2 bis 1:5. Der Preßdruck liegt zwischen 50 und 300 MPa, vorzugsweise zwischen 50 und 150 MPa, die Preßtemperatur zwischen RT und 100°C, je nach verpresstem Material. Der so hergestellte isotrope Formkörper wird anschließend zerkleinert, wobei ein isometrisches Granulat entsteht, dessen einzelne Granulatkörner keine Eigenschaftsgradienten aufweisen. Die Zerkleinerung wird so gesteuert, daß die entstehenden Granulatkörner jeweils mehr als 10 000 Primärteilchen enthalten, vorzugsweise zwischen 10⁴ und 10⁶ Primärteilchen. Durch Verpressen eines solchen Granulats mit herkömmlichen Preßmethoden, wie beispielsweise in einem Stahlgesenk bei RT bis 200 °C und Drücken von 10 bis 100 MPa, wird ein Formteil erhalten, dessen Ausmaße so bemessen werden müssen, daß sie die Schrumpfungen beim nachfolgenden Sinterprozess berücksichtigen.

Während des Aufheizens auf die gewünschte Preßtemperatur wird die in der Stahlmatrize enthaltende Luft durch die Dampfbildung des Kohlenwasserstoff- bzw. Alkoholzusatzes verdrängt. Somit wird bei der anschließenden Wärmebehandlung die Druckbelastung im Preßling als Folge der Luftdehnung in seinem kritischen impermeablen Bereich verhindert. Das bei der Abkühlung sich wieder verflüssigende überschüssige Luftverdrängungsmittel kann später, je nach Pulver, durch eine Wärmebehandlung im Temperaturbereich von 200 bis 900°C verdampfen und drucklos entweichen, so daß keine Ausbauchungen und sonstige Verformungen im Formteil entstehen können. Nach dem Sintern wird ein spannungsfreies Formteil mit hoher Endmaßgenauigkeit erhalten, das nicht mehr mechanisch nachbearbeitet werden muß.

Die nachstehenden Beispiele sollen das erfindungsgemäße Verfahren näher erläutern:
1. Zur Herstellung eines hexagonalen Graphitblocks mit einer Schlüsselweite von 360 mm wurde aus einem Gemisch von 64 Gew. % Naturgraphitpulver, 16 Gew.% Petrolkokspulver und 20 Gew. % Phenol-Formaldehyd-Binderharz durch Kneten in Methanol, Trocknen und anschließendes Mahlen auf eine Korngröße < 1 mm ein Preßpulver hergestellt. Als Naturgraphitpulver diente ein nachgereinigter Naturgraphit mit einem Aschegehalt von 150 ppm, einem mittleren Korndurchmesser von 15 µm und hoher Kristallinität (L_{c} > 1000 Å), als Petrolkokspulver ein Nadelkoks mit sehr niedrigem Aschegehalt (Asche < 10 ppm) und einem mittleren Korndurchmesser von 25 µm.
   Dem Preßpulver wurden als Gleitmittel 1 Gew. % Stearinsäure und als Luftverdrängungsmittel 0,4 Gew. % Octanol-(1) mit einer Dichte von 0,815 g/cm³ beigemischt. Zur Herstellung einer homogenen Mischung wurde die Stearinsäure geschmolzen, Octanol zugegeben und ein Anteil von rund 10 Gew. % des Preßpulvers in die Schmelze eingerührt und erkalten lassen. Das nunmehr mahlfähige Gut wurde nach Zerkleinerung auf eine Korngröße < 1 mm in die restliche Pulvercharge trocken eingemischt. Aus dieser Mischung wurde durch Pressen von kugelförmigen Formkörpern in einer Gummiform mit anschließendem Zerkleinern und Mahlen ein Granulat mit einer Körnung von 0,314 < d < 3,14 mm hergestellt.
   Das Überkorn (d > 3,14 mm) wurde erneut gemahlen, das Unterkorn der semihydrostatischen Pressung erneut zugeführt.
   Ein ölbeheiztes Sechskantgesenk mit einer Schlüsselweite von 366 mm wurde bei Raumtemperatur mit 178 kg dieses Granulates beladen, auf 180°C erwärmt und bei einem Druck von 12 MPa zu einem Block (Höhe 800 mm) mit einer Matrixdichte von 1 ,92 g/cm³ gepreßt.
   Nach Abkühlen auf eine Oberflächentemperatur von 80°C wurde der Block aus dem Gesenk ausgestoßen.
   Um den wichtigen Einfluß des Luftverdrängungsmittels auf gleichmäßiges Schrumpfen und die Formstabilität zu verdeutlichen, wurde zu Vergleichszwecken ein Blockelement ohne Luftverdrängungsmittel unter Beibehaltung aller übrigen Herstellungsbedingungen gefertigt. Die folgende Tabelle zeigt, daß nach dem erfindungsgemäßen Verfahren erheblich bessere Blockeigenschaften erzielt werden.

**Tabelle 1**

| Eigenschaft | Mit Octanol | Ohne Octanol |
|---|---|---|
| Schlüsselweite mm | | |
| oben | 360,1 | 361,2 |
| Mitte | 360,1 | 362,8 |
| unten | 360,0 | 360,8 |

| Dichte g/cm³ | | |
|---|---|---|
| oben | 1,76 | 1,70 |
| Mitte | 1,76 | 1,66 |
| unten | 1,78 | 1,72 |

| Zugfestigkeit MPa | | |
|---|---|---|
| radial | 84 | 55 |
| axial | 63 | 42 |

| Wärmeleitfähigkeit [Wm⁻¹ K⁻¹] bei 20°C | | |
|---|---|---|
| radial | 81 | 62 |
| axial | 55 | 39 |

| Thermische Ausdehnung (1/K x 10⁻⁶) 20-500°C | | |
|---|---|---|
| radial | 2,4 | 2,6 |
| axial | 3,8 | 4,5 |

2. Zur Herstellung einer Ventilführungshülse in einem Hubkolbenmotor diente als Ausgangspulver ein Zirkonoxid-Yttriumoxid-Pulvergemisch mit einem Yttriumoxidanteil von ca. 5 Gew. %, einer BET-Oberfläche von 17 m²/g und einer mittleren Teilchengröße von 0,9 µm. Zur Erreichung einer hohen Formstabilität der Preßlinge und eines gleichmäßigen Schrumpfens während des Sinterprozesses, wurde ein Granulat hergestellt. Hierzu wurde dem Ausgangspulver 1 Gew. % Stearinsäure mit einem Schmelzpunkt von 63°C als Gleitmittel und als Luftverdrängungsmittel 0,2 Gew.% Äthanol mit einer Dichte von 0,794 g/cm³ zugesetzt. Analog Beispiel 1 wurde ein Teil des Zirkonoxid-Yttriumoxidpulvers zugegeben und nach Erkalten der Masse ein Pulvergemisch hergestellt. Dieses Pulvergemisch wurde in eine Gummiform mit einer kugelförmigen Höhlung gefüllt, anschließend außerhalb der Presse auf 80°C erwärmt und dann erfindungsgemäß in einem Stahlgesenk zwischen Ober-und Unterstempel bei einem Preßdruck von 50 MPa bei Raumtemperatur verpreßt.
   Im nächsten Arbeitsschritt wurde der gepreßte Formkörper zerkleinert und über ein Kunststoffsieb der Maschenweite 500 µm gesiebt. Die so hergestellte Siebfraktion wies mit 0,96 g/cm³ eine deutlich höhere Schüttdichte auf als das Ausgangspulver mit einer Schüttdichte von 0,6 g/cm^{3.} Auch die Rütteldichte der Siebfraktion lag mit 1,19 g/cm₃ deutlich über der Rütteldichte 0,69 g/cm₃ des Ausgangspulvers.
   Das durch eine semihydrostatische Vorkompaktierung hergestellte Granulat wurde bei einem Preßdruck von 100 MPa im Stahlgesenk zu einem Hohlzylinder mit einer Länge von 75 mm, einem Außendurchmesser von 30 mm und einem Innendurchmesser von 11,25 mm verpreßt. Zur Austreibung des Gleitmittels wurde der Formkörper bei 800 °C wärmebehandelt und anschließend bei einer Maximaltemperatur von 1475°C gesintert. Die fertige Hülse wich von den Sollabmessungen um weniger als 0.05 mm ab; der Innendurchmesser lag im Toleranzfeld H 8. Die Dichte des fertiggesinterten Formkörpers betrug 6,07 g/cm³; diese entspricht 99 % der theoretischen Dichte.
3. Zur Herstellung eines Hohlzylinders aus einer Siliziumkarbid-Bor-Gemisch, bestand die Ausgangspulvermischung aus Siliziumcarbid (BET: 15 m²/g, Teilchengröße: 0,8 µm), Bor (BET: 11 m²/g; Teilchengröße: 0,9 µm) und einem als Pulver vorliegenden Kunstharz (Alnovol 844). Dieser Mischung wurde als Gleitmittel Stearinsäure und als Luftverdrängungsmittel 0,4 Gew. % Methanol mit einer Dichte von 0,795 g/cm³ zugesetzt. Die Herstellung des Granulates durch semihydrostatische Vorkompaktierung erfolgte anlaog Beispiel 2, wobei der Preßdruck auf 30 MPa eingestellt wurde.
   Das durch semihydrostatische Vorkompaktierung hergestellte Granulat wurde bei einem Preßdruck von 50 MPa bei 80°C im Stahlgesenk zu einem Hohlzylinder mit einer Länge von 59 mm, einem Außendurchmesser von 16,24 mm und einem Innendruchmesser von 10,44 mm verpreßt. Zur Austreibung des Gleitmittels und des Harzes wurde der Formkörper bei 1000°C wärmebehandelt.

Der Sinterprozeß erfolgte bei einer Temperatur von 2100°C in Argon-Atmosphäre. Die Abmessungen des gesinterten Körpers unterschieden sich um maximal 0,1 mm von den geforderten Sollabmessungen. Die Sinterdichte betrug 3,15 g/cm³ was 98,2 % der theoretischen Dichte der eingesetzen Pulverzusammensetzung entspricht.

## Patentansprüche

1. Verfahren zur Herstellung von Formteilen mit hoher Endmaßgenauigkeit aus hochtemperaturfesten Werkstoffen auf der Basis von Kohlenstoff, Oxiden, Karbiden, Nitriden, Siliziden oder deren Mischungen durch Pressen der mit einem Gleitmittel versetzten Pulvergemische in einer Gummiform und anschließendem Sintern,
dadurch gekennzeichnet,
daß das Pressen der Pulver und Pulvergemische in der Gummiform bei Drücken zwischen 30 und 300 MPa erfolgt, diese Formkörper anschließend zu einem isometrischen Granulat mit Körnern von jeweils mehr als 10 000 Primärteilchen zerkleinert werden und das Granulat in einer Metallmatrize mit Drücken von 10 bis 100 MPa zu einem Formteil mit einem die Schrumpfung beim Sintern berücksichtigenden Übermaß gepresst und abschließend gesintert wird,
und daß das Gleitmittel ein Luftverdrängungsmittel in Form einer organischen Verbindung enthält, deren Dampfdruck bei Raumtemperatur möglichst niedrig ist und deren Siedepunkt im Bereich der jeweils erforderlichen Preßtemperatur in der Metallmatrize liegt.

2. Verfahren nach Anspruch 1,
dadurch gekennzeichnet,
daß dem Pulver oder Pulvergemisch 1 bis 5 Gew. % Gleitmittel und 0,1 bis 1 Gew. % Luftverdrängungsmittel zugesetzt werden.

3. Verfahren nach Anspruch 1 und 2,
dadurch gekennzeichnet,
daß als Luftverdrängungsmittel Kohlenwasserstoffe oder Alkohole eingesetzt werden.

4. Verfahren nach Anspruch 1 bis 3,
dadurch gekennzeichnet,
daß die Formkörper in der Gummimatrize auf eine Dichte von über 40 % der theoretischen Dichte gepresst werden.

## Claims

1. A process for the production of moulded components with highly accurate final dimensions from materials stable at high temperatures based on carbon, oxides, carbides, nitrides, silicides or mixtures thereof by pressing the powder mixtures, mixed with a slip additive, in a rubber mould and subsequent sintering, characterised in that the pressing of the powders and powder mixtures is carried out in the rubber mould at pressures of between 30 and 300 MPa, these moulded bodies are then crushed to form an isometric granulate with grains each comprising more than 10,000 primary particles, and the granulate is pressed in a metal die at pressures of 10 to 100 MPa to form a moulded component with an oversize which takes into account the shrinkage during sintering, and is finally sintered, and that the slip additive contains an air displacement agent in the form of an organic compound, the vapour pressure of which at room temperature is as low as possible, and the boiling point of which is in the region of the respective required pressing temperature in the metal die.

2. A process as claimed in Claim 1, characterised in that 1 to 5 % by weight slip additive and 0.1 to 1% by weight air displacement agent are added to the powder or powder mixture.

3. A process as claimed in Claims 1 and 2, characterised in that hydrocarbons or alcohols are used as air displacement agent.

4. A process as claimed in Claims 1 to 3, characterised in that the moulded bodies are pressed in the rubber die to a density of more than 40% of the theoretical density.

## Revendications

1. Procédé pour la fabrication de pièces moulées ayant une haute exactitude de dimensions finales, en matériaux résistants à hautes températures, à base de carbone, oxydes, carbures, nitrures, siliciures ou de mélanges de ceux-ci, par compression des mélanges de poudres additionnés d'un lubrifiant dans un moule en caoutchouc et frittage subséquent, caractérisé en ce que la compression des poudres et mélanges de poudres s'effectue dans le moule en caoutchouc sous des pressions comprises entre 30 et 300 MPa, ces corps moulés sont ensuite fragmentés en un produit granulé isométrique à grains comportant chacun plus de 10 000 particules primaires et le produit granulé est comprimé dans une matrice métallique, sous des pressions de 10 à 100 MPa, en une pièce moulée, avec un surdimensionnement prenant en compte le retrait lors du frittage, et est ensuite fritté, et en ce que le lubrifiant contient un agent de déplacement d'air sous forme d'un composé organique dont la tension de vapeur à la température ambiante est la plus faible possible et dont le point d'ébullition se situe au voisinage de la température de compression requise dans chaque cas.

2. Procédé selon la revendication 1, caractérisé en ce que l'on ajoute à la poudre ou au mélange de poudres de 1 à 5 % en poids de lubrifiant et de 0,1 à 1% en poids d'agent de déplacement d'air.

3. Procédé selon la revendication 1 ou 2, caractérisé en ce que, en tant qu'agent de déplacement d'air, on utilise des hydrocarbures ou des alcools.

4. Procédé selon l'une des revendications 1 à 3, caractérisé en ce que les corps moulés sont comprimés dans le moule en caoutchouc jusqu'à une densité de plus de 40% de la densité théorique.
